# EUROPÄISCHE PATENTSCHRIFT

(11) **EP 2 311 027 B1**
(45) Veröffentlichungstag und Bekanntmachung des Hinweises auf die Patenterteilung: **16.09.2015**
(21) Anmeldenummer: 09779613.0
(22) Anmeldetag: 03.06.2009
(51) Int. Cl.: G10K 9/22, G01S 15/93, G01S 7/521

(54) **ULTRASCHALLSENSOR**
ULTRASONIC SENSOR
CAPTEUR À ULTRASONS

(30) Priorität: 31.07.2008 DE 102008040905
(43) Veröffentlichungstag der Anmeldung: 20.04.2011
(73) Patentinhaber: Robert Bosch GmbH, 70442 Stuttgart (DE)
(72) Erfinder: REICHE, Martin, 71263 Weil Der Stadt (DE)
(86) Internationale Anmeldenummer: PCT/EP2009/056776
(87) Internationale Veröffentlichungsnummer: WO 2010/012533

(56) Entgegenhaltungen:
- EP-A- 0 678 853
- WO-A-92/02795
- DE-A1- 19 727 877

## Beschreibung

### STAND DER TECHNIK

Die vorliegende Erfindung betrifft einen Ultraschallsensor, ferner eine Einparkhilfe für ein Fahrzeug mit einem Ultraschallsensor und ein entsprechendes Verfahren zum Herstellen eines Ultraschallsensors.

Ultraschallsensoren werden bei Kraftfahrzeugen z.B. für Einparkhilfen eingesetzt, die beim Einparken den verbleibenden Abstand zu Hindernissen vermessen, die eine Parklücke begrenzen. Derartige Einparkhilfen umfassen typischerweise einen oder mehrere Ultraschallsensoren und ein Steuergerät, wobei die Ultraschallsensoren einen Ultraschallwandler enthalten, der sowohl zum Aussenden als auch zum Empfangen von Ultraschallsignalen dient. Eine entscheidende funktionale Anforderung an die Ultraschallsensoren ist insbesondere eine so genannte Nahmessfähigkeit in einem Entfernungsbereich von unter 30 cm.

Die DE 3431 684 A1 offenbart einen elektroakustischen Wandler mit einem kappen- bzw. topfartigen Gehäuse, dessen Grundfläche als Membran ausgebildet ist. Auf der Membran sitzt ein piezoelektrischer Keramikkörper als Wandlerelement, der auf der der Membran gegenüber liegenden Seite durch eine dämpfende Schaumstoffschicht abgedeckt ist. Um in einer vertikalen Ebene eine Schallabstrahlung mit besonders geringem Öffnungswinkel, in einer horizontalen Ebene dagegen eine Schallabstrahlung mit einem verhältnismäßig großen Öffnungswinkel zu erzeugen, ist der Umriss der Membran und der diese umgebenden Seitenwand in einer Ebene senkrecht zur Schallabstrahlrichtung annähernd elliptisch, d.h. rotationsasymmetrisch ausgebildet. Ungünstig bei derartigen Konstruktionen ist, dass insbesondere im gepulsten Betrieb nicht nur die Membran, sondern auch die Seitenwand zu Schwingungen von Nebenmoden angeregt wird.

EP 0 678 853 A2 offenbart einen Ultraschallsensor mit einem Gehäuse mit einer umlaufenden Seitenwand, die einen unteren Seitenwandabschnitt mit einer rotationssymmetrischen Innenkontur und einen oberen Seitenwandabschnitt mit einem zylindrischen Profil aufweist.

WO 92/02795 A2 zeigt einen Ultraschallsensor mit einem einteiligen kreisringförmigen Gehäuse und einer Membran, die an zwei Seiten aus gleichem Material verstärkt ausgebildet ist.

Die DE 197 27 877 A1 offenbart einen Ultraschallwandler mit einem topfähnlichen Gehäuse mit einer ringförmigen Wandung und einer Bodenfläche als Schwingmembran. An der Außenseite der Wandung ist ein Stabilisierungsring vorgesehen, um dem Gehäuse eine größere Steifigkeit zu verleihen und die Ultraschallschwingung im Wesentlichen auf den Topfboden als Schwingmembran zu begrenzen. Insbesondere bei gepulster Sendeanregung des Ultraschallwandlers kommt es jedoch auch bei dieser Konstruktion zur Anregung von Nebenmoden, die typischerweise Kipp- und Knautschbewegungen der Membrantopfwand entsprechen. Diese Nebenmoden beeinträchtigen die Nahmessfähigkeit des Ultraschallsensors, da sie die Ausschwingzeit nach Sendeanregung verlängern und sich Schwebungsmuster mit kleinen reflektierten Ultraschallsignalen von nahen Objekten überlagern.

Es ist daher wünschenswert, die Anregung von Nebenmoden im Sendebetrieb von Ultraschallsensoren weiter zu reduzieren und damit die Nahmessfähigkeit zu verbessern.

### OFFENBARUNG DER ERFINDUNG

Demgemäß vorgesehen ist ein Ultraschallsensor mit einem Gehäuse, das eine umlaufende Seitenwand und eine Bodenfläche aufweist, d.h. in der Art eines Topfes oder einer Kappe geformt ist. Auf der Bodenfläche ist ein Wandlerelement zur Erzeugung von Ultraschallschwingungen angebracht, wie z.B. ein Piezoelement. Die Seitenwand umfasst einen unteren Seitenwandabschnitt, in dem die Seitenwand in einer zur Bodenfläche parallelen Ebene ein wesentlich rotationsasymmetrisches Profil aufweist. Weiterhin umfasst die Seitenwand einen oberen Seitenwandabschnitt, in dem die Seitenwand zu einem oberen Rand der Seitenwand hin in ein wesentlich rotationssymmetrisches Profil übergeht.

Durch die Ausbildung der beiden Seitenwandabschnitte, die durch das rotationsasymmetrische Profil im die Bodenfläche unmittelbar umgebenden unteren Seitenwandabschnitt bzw. durch den Übergang zu einem rotationssymmetrischen Profil am oberen Rand der Seitenwand unterscheiden, wird die unerwünschte mittelbare Anregung von z.B. auf Kipp- und/oder Knautschschwingungen der Seitenwände zurückgehenden Nebenschwingungsmoden bei Anregung eines Haupt- oder Arbeitsschwingungsmodes der Bodenfläche durch das Wandlerelement im Vergleich zu herkömmlichen Ultraschallsensoren erheblich reduziert.

Die Verhältnisse der Ausprägung von Arbeitsmode zu den störenden Nebenmoden sind u.a. durch elektrische Messungen bereits an Sensorgehäusen ermittelbar, die nicht durch eine Schaumstofffüllung oder ähnliches Material bedämpft sind. Die einzelnen Moden werden jeweils durch ein elektrisches Ersatzschaltbild charakterisiert. Die Ausprägung der Nebenmoden kann dabei durch Verhältnisse der Bedämpfung der einzelnen Nebenmoden und des Hauptmodes beurteilt werden. Vergleichsmessungen mit herkömmlichen Ultraschallsensoren, die ein topfartiges Gehäuse mit entlang der Höhe der Seitenwand konstantem Seitenwandprofil und ggf. einem Stabilisierungsring an der Außenseite der Seitenwand aufweisen, zeigen eine Erhöhung der Bedämpfung der Nebenmoden um einen Faktor 5 bis 10. Bei durch eine Schaumstofffüllung o.ä. bedämpften und ggf. anwendungsgemäß in weitere, das Gehäuse im Betrieb umschließende Umhüllungen eingebauten Ultraschallsensoren sind die Eigenformen der einzelnen Moden sowie die erhöhte Bedämpfung der Nebenmoden im Vergleich zum Arbeitsmode mittels Laserinterferometrie nachweisbar. Die erhöhte Bedämpfung der Nebenmoden führt weiterhin zu einer direkt nachweisbaren verbesserten Reduzierung von störenden Schwebungen im elektrisch verstärkten Empfangssignal des Ultraschallsensors, die mit kleinen reflektierten Ultraschallsignalen von nahen Objekten konkurrieren, und ermöglicht damit eine verbesserte Nahmessfähigkeit des erfindungsgemäßen Ultraschallsensors.

Gemäß einer bevorzugten Weiterbildung des Ultraschallsensors ist die Seitenwand im oberen Seitenwandabschnitt gegenüber dem unteren Seitenwandabschnitt zumindest überwiegend verjüngt, d.h. eine mittlere Wandstärke der Seitenwand im oberen Seitenwandabschnitt ist geringer als im unteren Seitenwandabschnitt. Gemäß einer anderen bevorzugten Weiterbildung erstreckt der obere Seitenwandabschnitt sich über mehr als 50% einer Gesamthöhe des Gehäuses. Vorzugsweise erstreckt der obere Seitenwandabschnitt sich über weniger als 80% der Gesamthöhe des Gehäuses. Bei diesen Weiterbildungen ist die Bedämpfung der störenden Nebenmoden besonders stark erhöht.

Gemäß einer bevorzugten Weiterbildung weist das Gehäuse im unteren und oberen Seitenwandabschnitt eine wesentlich zylindrische Außenkontur auf. Ein derartiger Ultraschallsensor ist besonders einfach zu verbauen, da der untere und obere Seitenwandabschnitt durch den Verlauf der inneren Kontur des Gehäuses ausgebildet sind, während die äußere Kontur z.B. in zu einem herkömmlichen Typ von Ultraschallsensor identischer Form vorgesehen sein kann. Auf diese Weise brauchen umgebende Teile z.B. eines Fahrzeugs nicht in ihrer Form angepasst zu werden.

Gemäß einer bevorzugten Weiterbildung weist die Seitenwand eine im oberen Seitenwandabschnitt umlaufende äußere Verdickung auf. Diese Verdickung wirkt als ein Stabilisierungsring, der zu einer größeren Steifigkeit des Gehäuses führt, was das Auftreten von Nebenmoden, bei denen die Seitenwände ausgelenkt werden, reduziert. Weiterhin wird die mechanische Robustheit des Gehäuses verbessert. Vorzugsweise verläuft die äußere Verdickung entlang des oberen Randes der Seitenwand.

Gemäß einer bevorzugten Weiterbildung umfasst der obere Seitenwandabschnitt einen in einer zur Bodenfläche senkrechten Ebene einen schrägen Verlauf einer Innenkontur des Gehäuses. Die zur Bodenfläche senkrechte Ebene kann z.B. im Falle einer zylindrischen oder allgemein rotationssymmetrischen Außenkontur des Gehäuses eine durch die Symmetrieachse der Außenkontur gehende Ebene sein, wobei ein Abschnitt der Schnittlinie der Innenkontur mit der zur Bodenfläche senkrechten Ebene eine zur Symmetrieachse der Außenkontur geneigte Gerade bildet. Vorzugsweise verläuft der Abschnitt der Schnittlinie etwa um 45° zur Bodenfläche geneigt, so dass z.B. die Innenkontur abschnittweise entlang der Mantelfläche eines Kegels mit einem Öffnungswinkel von 90° verläuft.

Gemäß einer weiteren bevorzugten Weiterbildung umfasst der obere Seitenwandabschnitt einen in einer zur Bodenfläche senkrechten Ebene gekrümmten Verlauf einer Innenkontur des Gehäuses. Die zur Bodenfläche senkrechte Ebene kann z.B. im Falle einer zylindrischen oder allgemein rotationssymmetrischen Außenkontur des Gehäuses eine durch die Symmetrieachse der Außenkontur gehende Ebene sein, wobei ein Abschnitt der Schnittlinie der Innenkontur mit der zur Bodenfläche senkrechten Ebene eine gekrümmte Linie bildet. Vorzugsweise umfasst die Innenkontur einen wesentlich viertelkreisförmigen Verlauf, d.h. ein Abschnitt der Schnittlinie der Innenkontur mit der senkrechten Ebene verläuft in Form eines Viertelkreises. Bei diesen beiden Weiterbildungen kann ein besonders günstiges Schwingungsverhalten des Gehäuses mit besonders hoher Bedämpfung von Nebenmoden erreicht werden.

Gemäß einer bevorzugten Weiterbildung umfasst der obere Seitenwandabschnitt einen in einer zur Bodenfläche senkrechten Ebene einen stufenartigen Verlauf einer Innenkontur des Gehäuses. Die zur Bodenfläche senkrechte Ebene kann z.B. im Falle einer zylindrischen oder allgemein rotationssymmetrischen Außenkontur des Gehäuses eine durch die Symmetrieachse der Außenkontur gehende Ebene sein, wobei ein Abschnitt der Schnittlinie der Innenkontur mit der zur Bodenfläche senkrechten Ebene eine waagerechte, d.h. zur Bodenfläche parallele Linie bildet. Ein derartiger Verlauf ist auf besonders einfache Weise herstellbar.

### KURZE BESCHREIBUNG DER ZEICHNUNGEN

Die vorliegende Erfindung wird nachfolgend anhand bevorzugter Ausführungsformen und beigefügten Figuren erläutert. Von den Figuren zeigen:
- Fig. 1A: eine Draufsicht auf einen Ultraschallsensor gemäß einer Ausführungsform der Erfindung;
- Fig. 1B-C: zwei unterschiedliche Schnittansichten des Ultraschallsensors aus Fig. 1A;
- Fig. 2: eine Schnittansicht eines Ultraschallsensors gemäß einer weiteren Ausführungsform mit einem viertelkreisartigen Innenkonturverlauf;
- Fig. 3: eine Schnittansicht eines Ultraschallsensors gemäß einer weiteren Ausführungsform mit einem stückweise linearen Innenkonturverlauf;
- Fig. 4: ein Diagramm eines von einem Ultraschallsensor gemäß einer Ausführungsform der Erfindung empfangenen Signalverlaufs, mit einem Vergleichsverlauf;
- Fig. 5A: ein Frequenzspektrum eines von einem herkömmlichen Ultraschallsensor ausgesandten Ultraschallsignals; und
- Fig. 5B: ein Frequenzspektrum eines von einem Ultraschallsensor gemäß einer Ausführungsform ausgesandten Ultraschallsignals.

In den Figuren bezeichnen gleiche Bezugszeichen gleiche oder funktionsgleiche Elemente, soweit nicht explizit anders angegeben.

### AUSFÜHRUNGSFORMEN DER ERFINDUNG

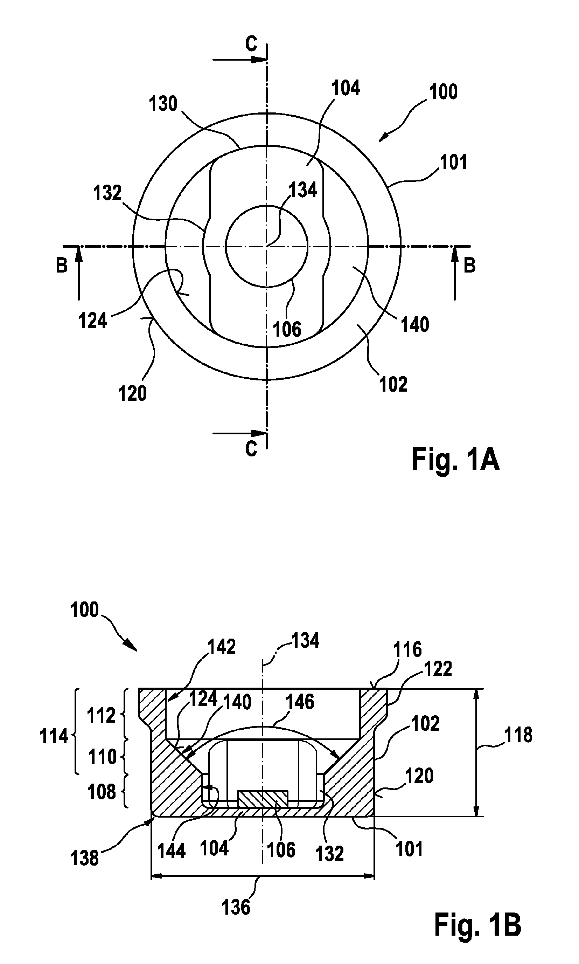

Figur 1A zeigt in einer Draufsicht einen Ultraschallsensor 100, der zur Verwendung in einem Einparkhilfesystem für ein Kraftfahrzeug geeignet ist. Der Ultraschallsensor umfasst ein topfartiges Gehäuse 101 mit einer Bodenfläche 104 und einer diese ringförmig umgebenden Seitenwand 102. Das Gehäuse 101 ist aus einem metallischen Werkstoff wie z.B. Aluminium geformt oder gefräst und aus Korrosions- und Lackiergründen mit einer Grundierung beschichtet.

Der Blick des Betrachters der Darstellung fällt von oben ins Innere des Gehäuses 101, sodass die Innenseite der Bodenfläche 104 dem Betrachter zugekehrt ist. Ein elektromechanisches Wandlerelement 106 wie hier beispielhaft ein zylinderscheibenförmiges Piezoelement ist auf die Innenseite der Bodenfläche 104 aufgebracht, beispielsweise geklebt, und kontaktiert. Aus Gründen der Übersichtlichkeit wurde auf die Darstellung der Kontaktierung verzichtet. Der verbleibende Raum im Inneren des Gehäuses 101 ist mit einem dämpfenden Material aufgefüllt, das ebenfalls nicht dargestellt ist. Weiterhin kann das gezeigte Gehäuse 101 von weiteren Umhüllungen z.B. aus weichen Elastomeren umgeben sein.

Die Bodenfläche 104 weist angenähert die Form eines Rechtecks mit abgerundeten kurzen Seiten auf. In seiner Mitte ist das Rechteck durch kreissegmentförmige Ausbuchtungen 132 verbreitert, die den Anbringungsort des Wandlerelements 106 umgeben. Die Seitenwand 102 weist an ihrem oberen Rand, auf den der Blick des Betrachters in Fig. 1A fällt, eine parallel zur Zeichenebene und zur Bodenfläche 104 liegende Randfläche auf, die von zwei konzentrischen Kreislinien begrenzt ist, deren Mittelpunkt auf einer Symmetrieachse 134 liegt, relativ zu der eine Außenkontur 120 des Gehäuses 101 rotationssymmetrisch ausgebildet ist.

Figur 1B zeigt eine Schnittansicht des Ultraschallsensors 100 aus Fig. 1A entlang einer in Fig. 1A mit B-B markierten Schnittebene, die durch die Symmetrieachse 134 der Außenkontur 120 geht. Die Außenkontur 120 ist über den überwiegenden Teil einer Gesamthöhe 118 des Gehäuses 101 sich erstreckend in Form eines Zylinders mit Außendurchmesser 136 gebildet, wobei die Zylinderachse auf der Symmetrieachse 134 liegt. Von einer Zylinderform weicht die Außenkontur 120 insofern ab, als am oberen Rand 116 des Gehäuses 101 eine als Stabilisierungsring wirkende Verdickung 122 ausgebildet und ferner die untere Kante 138 der Seitenwand 102 abgerundet ist, an der die Seitenwand 102 mit der Außenseite der Bodenfläche 104 zusammentrifft.

Während die Außenkontur 120 in der gezeigten Ausführungsform rotationssymmetrisch hinsichtlich der Symmetrieachse 134 gebildet ist, weicht die Innenkontur 124 wesentlich von einer rotationssymmetrischen Form ab. In einem unteren Seitenwandabschnitt 108, der sich unmittelbar an die Bodenfläche 104 anschließt, weist die Innenkontur 124 einen senkrechten Verlauf 144 auf, sodass die Seitenwand 102 im unteren Seitenwandabschnitt 108 in der Art eines Extrusionskörpers geformt ist, d.h. eine konstante Querschnittsform in einer beliebig innerhalb des unteren Seitenwandabschnitts 108 wählbaren, parallel zur Bodenfläche 104 und oberhalb derselben verlaufenden Ebene aufweist. Da die Innenkontur 124 dem in Fig. 1A dargestellten rotationsasymmetrischen Umriss der Bodenfläche 104 folgt, ist die Querschnittsform der Seitenwand 102 im unteren Seitenwandabschnitt 102 rotationsasymmetrisch. Im vorliegenden Ausführungsbeispiel ist weiterhin die Dicke der Seitenwand 102 im unteren Seitenwandabschnitt 108 nicht konstant.

In einem oberen Wandabschnitt 114 der Seitenwand 102, der sich an den unteren Wandabschnitt 108 anschließt, geht die Innenkontur 124 sukzessive von der rotationsasymmetrischen Querschnittsform, die sie im unteren Seitenwandabschnitt 108 aufweist, in eine rotationssymmetrische Formgebung am oberen Rand 116 über. In der vorliegenden Ausführungsform umfasst der obere Seitenwandabschnitt 114 einen Übergangsabschnitt 110 und einen Randabschnitt 112, in dem die Innenkontur 124 senkrecht und rotationssymmetrisch zur Symmetrieachse 134 der Außenkontur 120 verläuft, d.h. einer Zylinderfläche 142 folgt, deren Zylinderachse mit der Symmetrieachse 134 zusammenfällt. Der Innendurchmesser der Zylinderfläche 142 ist dabei so gewählt, dass sie den rotationsasymmetrischen Umriss der Bodenfläche 104 in der Projektion entlang der Symmetrieachse 134 vollständig umschließt. Wie aus Fig. 1A ersichtlich, sind die kurzen Seiten 130 des angenähert rechteckförmigen Umrisses der Bodenfläche 104 gerade so abgerundet, dass sie in der der Projektion entlang der Symmetrieachse 134 mit der im Randabschnitt 112 zylinderförmigen Innenkontur 124 zusammenfallen.

Im Übergangsabschnitt 110 verläuft die Innenkontur 124 dagegen in solchen Abschnitten, die in der Projektion entlang der Symmetrieachse 134 außerhalb des Umrisses der Bodenfläche 104 liegen, entlang einer Mantelfläche 140 eines nach unten zulaufenden Kegels, dessen Spitze auf der Symmetrieachse 134 liegt. Dies entspricht in der senkrechten, durch die Symmetrieachse 134 verlaufenden Schnittebene von Fig. 1B einer geraden Schnittkontur, die gegenüber der Symmetrieachse 134 bzw. der Bodenfläche 104 schräg geneigt verläuft. Der Öffnungswinkel 146 des Kegels kann z.B. 90° betragen, sodass die Mantelfläche bezüglich der Symmetrieachse 134 um einen Winkel von 45° geneigt ist. In solchen Abschnitten, die in der Projektion entlang der Symmetrieachse 134 innerhalb des Umrisses der Bodenfläche 104 liegen, verläuft die Innenkontur 124 dagegen senkrecht, in Fortsetzung ihres senkrechten Verlaufs im unteren Seitenwandabschnitt 108.

Der obere Seitenwandabschnitt 114 erstreckt sich über mehr als 50% der Gesamthöhe 118 der Seitenwand 102 bzw. des Gehäuses 101. Da der Verlauf der Innenkontur 124 sich im oberen Seitenwandabschnitt 114 zum oberen Rand 116 hin sukzessiv aufweitet, während die Außenkontur 120 abgesehen von der am oberen Rand 116 gebildeten Verdickung 122 wesentlich zylinderförmig, d.h. mit konstantem Außendurchmesser 136 verläuft, ergibt sich insgesamt eine sukzessive Verjüngung der Außenwand 102 im oberen Seitenwandabschnitt 108.

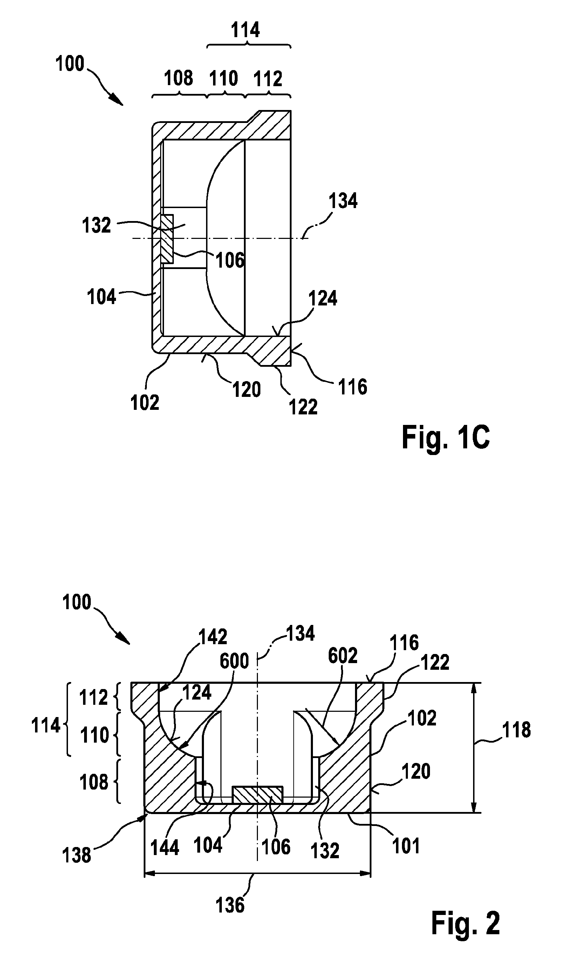

Figur 1C zeigt eine weitere Schnittansicht des Ultraschallsensors 100 aus Fig. 1A entlang einer in Fig. 1A mit C-C markierten Schnittebene, die ebenfalls durch die Symmetrieachse 134 der Außenkontur 120 geht. In alternativen Ausführungsformen kann z.B. auf einen Randabschnitt 112 verzichtet werden, in dem die Innenkontur 124 der Seitenwand 102 zylinderförmig verläuft, sodass der obere Seitenwandabschnitt 108 ausschließlich einen Übergangsabschnitt 110 umfasst und die Seitenwand 102 erst am oberen Rand 116 einen rotationssymmetrische Formgebung annimmt.

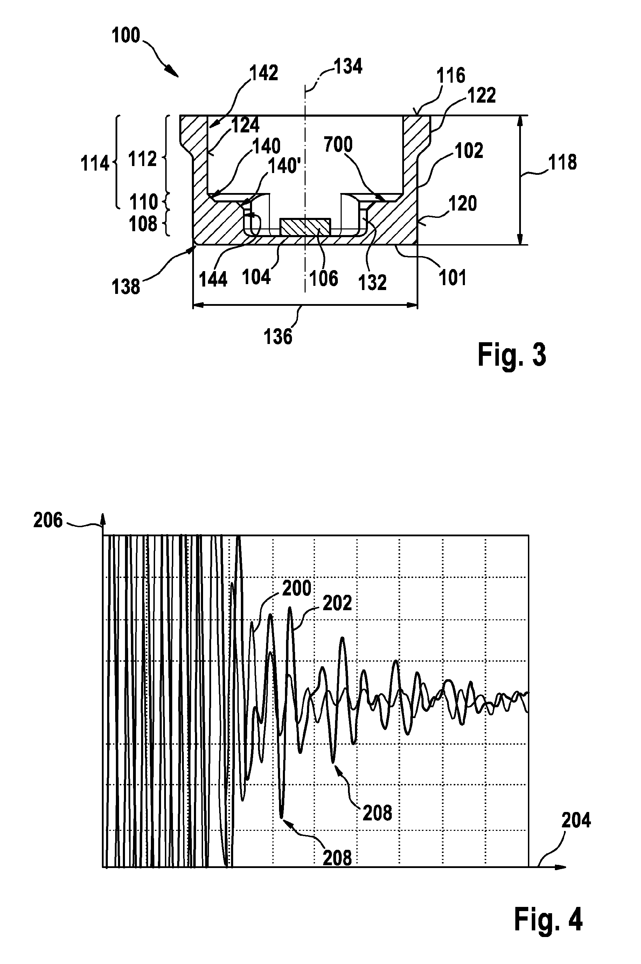

Figur 2 und 3 zeigen jeweils in Schnittansichten weitere Ausführungsformen von Ultraschallsensoren 100, bei denen der Verlauf der Innenkontur 124 im Übergangsabschnitt 110 abweichend von der in Fig. 1B dargestellten Kegelmantelform 140 der vorstehend beschriebenen Ausführungsform gestaltet ist. Die Schnittebenen der Schnittansichten von Fig. 2 und 3 verlaufen jeweils durch die Symmetrieachse 134 der Außenkontur 120 des Gehäuses 101. Die Bodenfläche 104 des Gehäuses 101 weist wie bei der Ausführungsform aus Fig. 1A-C eine angenähert rechteckige Form auf, so dass sich eine im Wesentlichen gleiche Draufsicht wie in Fig. 1A ergibt und auf eine gesonderte Darstellung entsprechender Draufsichten auf die Ausführungsformen von Fig. 2 und 3 verzichtet wurde. Die Schnittebenen von Fig. 2 und 3 verlaufen entlang der Längsachse der angenähert rechteckigförmigen Bodenfläche 104, entsprechend der Darstellung in Fig. 1B.

In der Ausführungsform von Fig. 2 ist die Innenkontur 124 im Übergangsabschnitt 110 derart gestaltet, dass sie in der gezeigten Schnittdarstellung anstelle der geraden, geneigten Schnittkontur 140 in Fig. 1B eine gekrümmte Schnittkontur 600 aufweist, die sich an den zylindrischen Verlauf 142 der Innenkontur 124 im Randabschnitt 112 glatt anschließt und sich nach unten hin mit stetig abnehmender Neigung gegenüber der Bodenfläche 104 fortsetzt. Die gekrümmte Schnittkontur 600 weist einen über den Verlauf der Krümmung konstanten Krümmungsradius 602 auf, der z.B. so gewählt sein kann, dass die gekrümmte Schnittkontur 600 an ihrem unteren Ende eine zur Bodenfläche 104 parallele Neigung erreicht, d.h. insgesamt viertelkreisförmig verläuft.

In der Ausführungsform von Fig. 3 weist in der gezeigten Schnittdarstellung die Innenkontur 124 im Übergangsabschnitt 110 eine abschnittweise aus geraden Konturabschnitten 140, 700, 140' zusammengesetzte Schnittkontur auf. Ein erster Konturabschnitt 140, der sich an den zylindrischen Verlauf 142 der Innenkontur 124 im Randabschnitt 112 anschließt, verläuft zur Bodenfläche 104 um 45° geneigt. An den ersten Konturabschnitt 140 schließen sich ein zweiter Konturabschnitt 140, der parallel zur Bodenfläche 104 verläuft, und ein dritter Konturabschnitt 140' an, der wiederum zur Bodenfläche 104 um 45° geneigt verläuft.

Alternative Ausführungsformen können auch einen rein stufenartigen Übergang zwischen dem Randabschnitt 112 und dem unteren Seitenwandabschnitt 108 vorsehen, so dass sich der Randabschnitt 112 ohne einen Übergangsabschnitt 110 endlicher Höhe direkt an den unteren Seitenwandabschnitt 108 anschließt. Der Verlauf der Innenkontur 124 kann weiterhin auch in anderer Weise als in Fig. 3 gezeigt stückweise aus Abschnitten zusammengesetzt sein, die stufenartig, d.h. in einer senkrechten Schnittansicht wie in Fig. 1B mit waagerechter Schnittkontur, kegelartig, d.h. in einer ebensolchen Schnittansicht mit gerade geneigter Schnittkontur, und/oder mit einer kreisförmig oder anderweitig gekrümmten Schnittkontur geformt sind. Beispielsweise kann auch ein Verlauf mit viertelkreisförmiger Schnittkontur durch einen stückweise aus kegel- und/oder stufenartigen Abschnitten zusammengesetzten Verlauf der Innenkontur 124 angenähert sein.

Im Betrieb des Ultraschallsensors 100 wird das piezoelektrische Wandlerelement 106 pulsartig alternierend von einem Steuergerät mit einem elektrischen Anregungssignal beaufschlagt, das ein entsprechendes elektrisches Feld senkrecht zur Bodenfläche 104 erzeugt. Bei geeigneter Ausrichtung der Polarisation erzeugt das elektrische Feld z.B. eine Kontraktion des Wandlerelements 106 quer zum anliegenden elektrischen Feld. Diese Kontraktion des Wandlerelements 106 tangential zur Bodenfläche 104 erzeugt nach dem sogenannten Flexbogenprinzip eine Durchbiegung der Bodenfläche 104.

Dabei ist es zweckmäßig, zur Erreichung größtmöglicher Auslenkungen ein Ansteuersignal mit einer Frequenz anzulegen, die mit einem mechanisch möglichen, z.B. annähernd rotationssymmetrischen, Grund-, Arbeits- oder Obermode der Bodenfläche übereinstimmt. Durch geeignete elektrische Beschaltung des Wandlerelements 106 im Steuergerät ist die mechanische Bandbreite des Arbeitsmodes soweit vergrößert, dass kurze Ultraschallpulse, die eine große Bandbreite benötigen, ausgesandt werden können. Bei gepulster Sendeanregung des Wandlerelements 106 werden weitere Nebenmoden angeregt, die typischerweise Kipp- und Knautschbewegungen der Seitenwand 102 entsprechen. Diese Moden sind elektrisch nicht kompensiert und haben dadurch geringe Bandbreite bzw. große Zeitkonstanten.

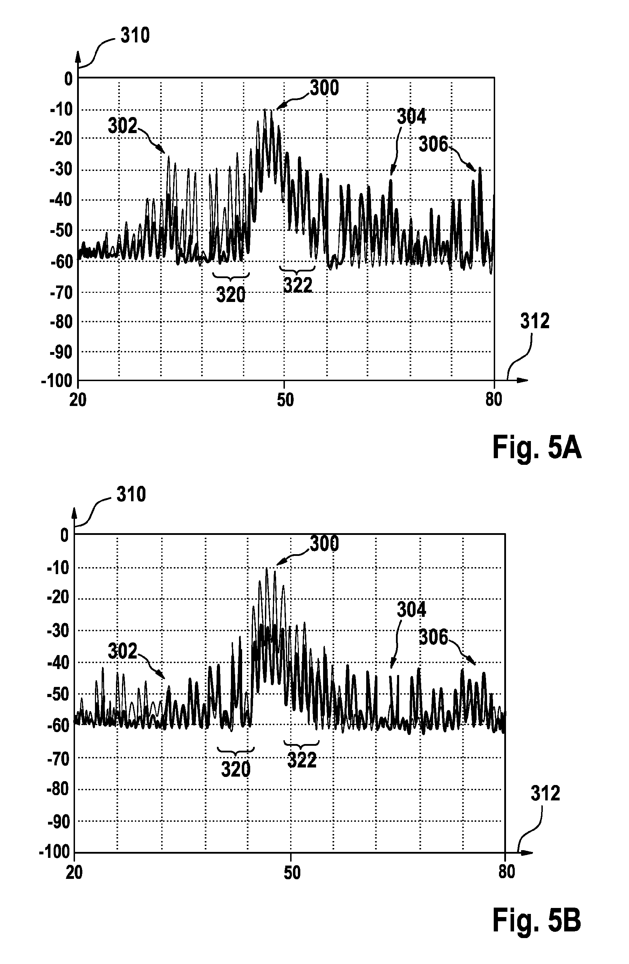

Figur 5A zeigt ein mittels Laserinterferometrie aufgenommenes Frequenzspektrum eines von einem herkömmlichen Ultraschallsensor ausgesandten Ultraschallsignals im Frequenzbereich zwischen 20 kHz und 80 kHz. Dabei ist die Frequenz in der Einheit kHz linear entlang einer waagerechten Achse 312 aufgetragen, während die logarithmische spektrale Intensität in dB bezogen auf eine Vergleichsleistung von 1 mW entlang einer vertikalen Achse 310 aufgetragen ist. Im dargestellten Spektrum sind mehrere, in unterschiedlichen Strichstärken dargestellte Einzelkurven überlagert, die durch Messungen an unterschiedlichen Punkten der schwingenden Bodenfläche des Ultraschallsensors erhalten wurden. Das Frequenzspektrum weist ein deutliches Maximum 300 im Bereich eines Arbeitsmodes bei 48 kHz auf, sowie weitere Nebenmaxima 302, 304, 306, die für den Betrieb des Ultraschallsensors störenden Nebenmoden bei 33 kHz, 67 kHz bzw. 75 kHz entsprechen.

Figur 5B zeigt ein auf gleichartige Weise gewonnenes Frequenzspektrum eines Ultraschallsignals, das von einem Ultraschallsensor gemäß einer Ausführungsform der Erfindung ausgesandt wurde. Das Maximum 300 im Bereich des Arbeitsmodes bei 48 kHz ist mit im Vergleich zu Fig. 3A unveränderter Intensität vorhanden, einschließlich unmittelbar angrenzender Seitenbänder 320, 322. Dem gegenüber sind die Intensitäten der unerwünschten Nebenmoden 302, 304, 306 um Faktoren von 5 bis 10 erheblich reduziert.

Figur 4 zeigt ein Diagramm, das über einer gemeinsamen Zeitachse 204 in unterschiedlichen Strichstärken dargestellt zwei Signalverläufe 200, 202 zweier Empfangssignale zeigt, wobei ein erstes Empfangssignal 202 von einem Ultraschallsensor herkömmlicher Bauart und ein zweites Empfangssignal 200 von einem Ultraschallsensor gemäß einer Ausführungsform der Erfindung empfangen wurde. Die vertikale Achse 206 zeigt den jeweiligen Signalpegel des erhaltenen elektrischen Spannungssignals. Deutlich zu erkennen im ersten Empfangssignal 202 sind durch Nebenmoden hervorgerufene Schwebungen 208 im Empfangssignal 202, die die Nahmessfähigkeit des herkömmlichen Ultraschallsensors beeinträchtigen. Derartige Schwebungen sind im zweiten Empfangssignal 200 wirksam unterbunden.

## Patentansprüche

1. Ultraschallsensor (100) mit einem Gehäuse (101) mit einer umlaufenden Seitenwand (102) und einer Bodenfläche (104), auf welcher ein Wandlerelement (106) zur Erzeugung von Ultraschallschwingungen angebracht ist, wobei die Seitenwand (102) aufweist:
- einen unteren, der Bodenfläche (104) benachbarten Seitenabschnitt (108), in welchem die Seitenwand (102) in einer zur Bodenfläche (104) parallelen Ebene ein im wesentlichen asymmetrisches Profil aufweist; und
- einen zu dem unteren Seitenwandabschnitt (108) benachbart positionierten oberen Seitenwandabschnitt (114), in welchem die Seitenwand (102) zu einem oberen Rand (116) der Seitenwand (102) hin in ein im wesentlichen rotationssymmetrisches Profil bezogen zu einer der Bodenfläche (104) parallelen Ebene übergeht,
**dadurch gekennzeichnet, dass**
der obere Seitenwandabschnitt (114), der sich an den unteren Seitenwandabschnitt (108) anschließt, einen Übergangsabschnitt (110) und einen Randabschnitt (112) umfasst, wobei in dem Übergangsabschnitt (110) die Innenkontur (124) des Gehäuses (101) sukzessive von der rotationsasymmetrischen Querschnittsform im unteren Seitenwandabschnitt (108) in eine rotationssymmetrische Formgebung am oberen Rand (116) übergeht, und wobei in dem Randabschnitt (112) die Innenkontur (124) senkrecht und rotationssymmetrisch zur Symmetrieachse (134) der Außenkontur (120) des Gehäuses (101) verläuft.

2. Ultraschallsensor (100) nach Anspruch 1, wobei die Seitenwand (102) im oberen Seitenwandabschnitt (114) im Vergleich zum unteren Seitenwandabschnitt (108) zumindest überwiegend verjüngt ist.

3. Ultraschallsensor (100) nach Anspruch 1 oder 2, wobei der obere Seitenwandabschnitt (114) sich über mehr als 50%, und insbesondere weniger als 80% einer Gesamthöhe (118) des Gehäuses (101) erstreckt.

4. Ultraschallsensor (100) nach einem der vorhergehenden Ansprüche, wobei das Gehäuse (101) im unteren (108) und oberen (114) Seitenwandabschnitt eine wesentlich zylindrische Außenkontur (120) aufweist.

5. Ultraschallsensor (100) nach einem der vorhergehenden Ansprüche, wobei die Seitenwand (102) eine im oberen Seitenwandabschnitt (114), insbesondere am oberen Rand (116), umlaufende äußere Verdickung (122) aufweist.

6. Ultraschallsensor (100) nach einem der vorhergehenden Ansprüche, wobei der obere Seitenwandabschnitt (114) in seinem Übergangsabschnitt (110) einen in einer zur Bodenfläche (104) senkrechten Ebene schrägen, insbesondere um etwa 45° geneigten Verlauf (140, 140') einer Innenkontur (124) des Gehäuses (101) umfasst.

7. Ultraschallsensor (100) nach einem der Ansprüche 1 bis 5, wobei der obere Seitenwandabschnitt (114) in seinem Übergangsabschnitt (110) einen in einer zur Bodenfläche (104) senkrechten Ebene gekrümmten, insbesondere wesentlich viertelkreisförmigen Verlauf (602) einer Innenkontur (124) des Gehäuses (101) umfasst.

8. Ultraschallsensor (100) nach einem der Ansprüche 1 bis 5, wobei der obere Seitenwandabschnitt (114) in seinem Übergangsabschnitt (110) einen in einer zur Bodenfläche (104) senkrechten Ebene stufenartigen Verlauf (700) einer Innenkontur (124) des Gehäuses (101) umfasst.

9. Einparkhilfe für ein Fahrzeug mit einem Steuergerät und einem Ultraschallsensor (100) nach einem der Ansprüche 1 bis 7.

10. Verfahren zur Herstellung eines Ultraschallsensors (100), welches folgende Schritte aufweist:
- Ausbilden eines Gehäuses (101) mit einer umlaufenden Seitenwand (102) und einer Bodenfläche (104) derart, dass die Seitenwand (102) einen der Bodenfläche (104) benachbart positionierten unteren Seitenwandabschnitt (108) mit einem in einer zur Bodenfläche parallelen Ebene wesentlich rotationsasymmetrischen Profil und einem zu dem unteren Seitenwandabschnitt (108) benachbart positionierten oberen Seitenwandabschnitt (114) mit einem Übergangsabschnitt (110) und einen Randabschnitt (112) aufweist, wobei in dem Übergangsabschnitt (110) die Seitenwand zu einem oberen Rand (116) der Seitenwand (102) hin in ein wesentlich rotationssymmetrisches Profil übergeht; wobei in dem Übergangsabschnitt (110), der sich an den unteren Seitenwandabschnitt (108) anschließt, die Innenkontur (124) des Gehäuses (101) sukzessive von der rotationsasymmetrischen Querschnittsform, die sie im unteren Seitenwandabschnitt (108) aufweist, in eine rotationssymmetrische Formgebung am oberen Rand (116) übergeht, und wobei in dem Randabschnitt (112) die Innenkontur (124) senkrecht und rotationssymmetrisch zur Symmetrieachse (134) der Außenkontur (120) des Gehäuses (101) verläuft,
- Anbringen eines Wandlerelements (106) zur Erzeugung von Ultraschallschwingungen auf der Bodenfläche (104).

## Claims

1. Ultrasonic sensor (100) comprising a housing (101) with a circumferential side wall (102) and a bottom surface (104), to which a converter element (106) for generating ultrasonic oscillations is fitted, the side wall (102) having:
- a lower side section (108), adjacent to the bottom surface (104), in which the side wall (102) has a substantially asymmetrical profile in a plane parallel to the bottom surface (104); and
- an upper side wall section (114), positioned adjacent to the lower side wall section (108), in which the side wall (102) changes towards an upper edge (116) of the side wall (102) into a substantially rotationally symmetrical profile in relation to a plane parallel to the bottom surface (104),
**characterized in that**
the upper side wall section (114), which adjoins the lower side wall section (108), comprises a transition section (110) and an edge section (112), wherein, in the transition section (100), the inner contour (124) of the housing (101) changes gradually from the rotationally asymmetrical cross-sectional shape in the lower side wall section (108) to a rotationally symmetrical shape at the upper edge (116), and wherein, in the edge section (112), the inner contour (124) extends at right angles and rotationally symmetrically with respect to the axis of symmetry (134) of the outer contour (120) of the housing (101).

2. Ultrasonic sensor (100) according to Claim 1, wherein the side wall (102) in the upper side wall section (114) is at least predominantly tapered in comparison with the lower side wall section (108).

3. Ultrasonic sensor (100) according to Claim 1 or 2, wherein the upper side wall section (114) extends over more than 50% and in particular less than 80% of a total height (118) of the housing (101).

4. Ultrasonic sensor (100) according to one of the preceding claims, wherein the housing (101) in the lower (108) and upper (114) side wall section has a substantially cylindrical outer contour (120).

5. Ultrasonic sensor (100) according to one of the preceding claims, wherein the side wall (102) has an outer thickening (122) running around in the upper side wall section (114), in particular at the upper edge (116).

6. Ultrasonic sensor (100) according to one of the preceding claims, wherein, in a plane that is perpendicular to the bottom surface (104), the transition section (110) of the upper side wall section (114) comprises an oblique course (140, 140'), in particular inclined by about 45°, of an inner contour (124) of the housing (101).

7. Ultrasonic sensor (100) according to one of Claims 1 to 5, wherein, in a plane that is perpendicular to the bottom surface (104), the transition section (110) of the upper side wall section (114) comprises a curved course (602), in particular substantially in the form of a quarter of a circle, of an inner contour (124) of the housing (101).

8. Ultrasonic sensor (100) according to one of Claims 1 to 5, wherein, in a plane that is perpendicular to the bottom surface (104), the transition section (110) of the upper side wall section (114) has a step-like course (700) of an inner contour (124) of the housing (101).

9. Parking aid for a vehicle, having a control device and an ultrasonic sensor (100) according to one of Claims 1 to 7.

10. Method for producing an ultrasonic sensor (100), which comprises the following steps:
- forming a housing (101) having a circumferential side wall (102) and a bottom surface (104) in such a way that the side wall (102) has a lower side wall section (108) positioned adjacent to the bottom surface (104) and having a substantially rotationally asymmetrical profile in a plane parallel to the bottom surface (104), and an upper side wall section (114), positioned adjacent to the lower side wall section (108) and having a transition section (110) and an edge section (112), wherein, in the transition section (110), the side wall (102) changes towards an upper edge (116) of the side wall (102) into a substantially rotationally symmetrical profile in relation to a plane parallel to the bottom surface (104), wherein, in the transition section (110), which adjoins the lower side wall section (108), the inner contour (124) of the housing (101) changes gradually from the rotationally asymmetrical cross-sectional shape which it has in the lower side wall section (108) to a rotationally symmetrical shape at the upper edge (116), and wherein, in the edge section (112), the inner contour (124) extends at right angles and rotationally symmetrically with respect to the axis of symmetry (134) of the outer contour (120) of the housing (101).
- Fitting a converter element (106) for generating ultrasonic oscillations to the bottom surface (104).

## Revendications

1. Capteur à ultrasons (100) comprenant un boîtier (101) avec une paroi latérale périphérique (102) et une surface de fond (104) sur laquelle est monté un élément de convertisseur (106) pour générer des vibrations ultrasonores, la paroi latérale (102) présentant :
- une portion latérale inférieure (108), adjacente à la surface de fond (104), dans laquelle la paroi latérale (102) présente un profil essentiellement asymétrique dans un plan parallèle à la surface de fond (104) ; et
- une portion de paroi latérale supérieure (114) positionnée de manière adjacente à la portion de paroi latérale inférieure (108), dans laquelle la paroi latérale (102) se prolonge, vers un bord supérieur (116) de la paroi latérale (102), par un profil ayant essentiellement une symétrie de révolution par rapport à un plan parallèle à la surface de fond (104),
**caractérisé en ce que**
la portion de paroi latérale supérieure (114), qui se raccorde à la portion de paroi latérale inférieure (108), comprend une portion de transition (110) et une portion de bord (112), le contour intérieur (124) du boîtier (101), dans la portion de transition (110), se prolongeant successivement de la forme sans symétrie de révolution en section transversale dans la portion de paroi latérale inférieure (108) dans une forme à symétrie de révolution au niveau du bord supérieur (116), et le contour intérieur (124) s'étendant dans la portion de bord (112) perpendiculairement et avec une symétrie de révolution par rapport à l'axe de symétrie (134) du contour extérieur (120) du boîtier (101).

2. Capteur à ultrasons (100) selon la revendication 1, dans lequel la paroi latérale (102) est au moins principalement rétrécie dans la portion de paroi latérale supérieure (114) par comparaison avec la portion de paroi latérale inférieure (108).

3. Capteur à ultrasons (100) selon la revendication 1 ou 2, dans lequel la portion de paroi latérale supérieure (114) s'étend sur plus de 50 %, et en particulier sur moins de 80 % d'une hauteur totale (118) du boîtier (101).

4. Capteur à ultrasons (100) selon l'une quelconque des revendications précédentes, dans lequel le boîtier (101) présente, dans les portions de paroi latérale inférieure (108) et supérieure (114), un contour extérieur essentiellement cylindrique (120).

5. Capteur à ultrasons (100) selon l'une quelconque des revendications précédentes, dans lequel la paroi latérale (102) présente un épaississement extérieur périphérique (122) dans la portion de paroi latérale supérieure (114), en particulier au niveau du bord supérieur (116).

6. Capteur à ultrasons (100) selon l'une quelconque des revendications précédentes, dans lequel la portion de paroi latérale supérieure (114) comprend, dans sa portion de transition (110), une allure (140, 140') d'un contour intérieur (124) du boîtier (101) oblique dans un plan perpendiculaire à la surface de fond (104), notamment inclinée d'environ 45°.

7. Capteur à ultrasons (100) selon l'une quelconque des revendications 1 à 5, dans lequel la portion de paroi latérale supérieure (114) comprend, dans sa portion de transition (110), une allure (602) d'un contour intérieur (124) du boîtier (101) courbe dans un plan perpendiculaire à la surface de fond (104), notamment essentiellement en forme de quart de cercle.

8. Capteur à ultrasons (100) selon l'une quelconque des revendications 1 à 5, dans lequel la portion de paroi latérale supérieure (114) comprend, dans sa portion de transition (110), une allure (700) d'un contour intérieur (124) du boîtier (101) de forme étagée dans un plan perpendiculaire à la surface de fond (104).

9. Aide au stationnement pour un véhicule comprenant un appareil de commande et un capteur à ultrasons (100) selon l'une quelconque des revendications 1 à 7.

10. Procédé de fabrication d'un capteur à ultrasons (100), qui présente les étapes suivantes :
- réalisation d'un boîtier (101) avec une paroi latérale périphérique (102) et une surface de fond (104), de telle sorte que la paroi latérale (102) présente une portion de paroi latérale inférieure (108) positionnée de manière adjacente à la surface de fond (104), avec un profil essentiellement sans symétrie de révolution dans un plan parallèle à la surface de fond, et une portion de paroi latérale supérieure (114) positionnée de manière adjacente à la portion de paroi latérale inférieure (108) avec une portion de transition (110) et une portion de bord (112), la paroi latérale se prolongeant, vers un bord supérieur (116) de la paroi latérale (102), par un profil ayant essentiellement une symétrie de révolution dans la portion de transition (110) ; le contour intérieur (124) du boîtier (101), dans la portion de transition (110) qui se raccorde à la portion de paroi latérale inférieure (108), se prolongeant successivement de la forme sans symétrie de révolution en section transversale, qu'il présente dans la portion de paroi latérale inférieure (108), par une forme à symétrie de révolution au niveau du bord supérieur (116), et le contour intérieur (124) s'étendant dans la portion de bord (112) perpendiculairement et avec une symétrie de révolution par rapport à l'axe de symétrie (134) du contour extérieur (120) du boîtier (101),
- montage d'un élément de convertisseur (106) pour générer des vibrations ultrasonores sur la surface de fond (104).
